(19) Europäisches Patentamt
European Patent Office
Office européen des brevets

(11) **EP 4 155 712 A1**

(12) **EUROPEAN PATENT APPLICATION**

(43) Date of publication:
**29.03.2023   Bulletin 2023/13**

(21) Application number: **21199381.1**

(22) Date of filing: **28.09.2021**

(51) International Patent Classification (IPC):
**G01N 15/14** *(2006.01)*      **G01N 15/00** *(2006.01)*

(52) Cooperative Patent Classification (CPC):
**G01N 15/1484;** G01N 2015/0073

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Healthcare Diagnostics, Inc.**
**Tarrytown, NY 10591 (US)**

(72) Inventors:
• **Kraus, Martin**
**90765 Fürth (DE)**
• **Seliger, Ramona**
**91346 Wiesenttal-Muggendorf (DE)**
• **Mach, Tivadar**
**10179 Berlin (DE)**
• **Paulicka, Peter**
**91341 Röttenbach (DE)**

(74) Representative: **Siemens Patent Attorneys**
**Postfach 22 16 34**
**80506 München (DE)**

(54)   **DEVICE AND METHOD FOR OPTICALLY ANALYZING BLOOD CELLS**

(57)   The disclosure relates to a device (1) comprising a microfluidic chamber with at least one fluidic flow-through channel, a first inlet (6) port configured to introduce at least a part of the blood sample into the fluidic channel, a first outlet (7) port configured to discharge at least a part of the blood sample from the fluidic channel, a flow generating and stopping device configured to generate a flow of the sample through the channel and to stop the flow while a least a part of the sample comprising at least one blood cell is situated within the channel and wherein after stopping the flow the sample is only influenced by gravity and inertial forces such that blood cells within the sample sediment on a first area of a lower surface of the channel, wherein cells sedimented within the first area of the lower surface can be optically analyzed in the chamber.

FIG 1

**Description**

FIELD OF THE DISCLOSURE

The disclosure relates to a device and method for optically analyzing a blood cell from a blood sample and relates a device comprising a microfluidic chamber with at least one fluidic flow-through channel.

BACKGROUND

Blood parameter analysis in central lab settings usually employs a combination of different chemical, electrical and optical measurement principles. Such approaches are space consuming, need a higher number of different reagents and maintenance activities. Further, in point of care testing, a number of different approaches exist which usually use optical measurement principles together with a computational analysis which may comprise use of artificial intelligence. For example, quantitative phase microscopy has emerged as a tool for biomedical research, due to its capability to make optical thickness variation of a specimen visible without the need of staining. Such microscopy techniques can for example be used for red blood cell (RBS) volume analysis on a cellular level and could allow simpler, less space consuming analysis settings without need of highly skilled stuff for maintenance.

For an optical blood analysis, the different cell types present in the blood need to be arranged in a way that they can be imaged without overlapping each other, forming a monolayer of cells, in a sufficiently small time to allow high throughput of samples.

Moreover, a dilution in a suitable medium is needed to enable high-quality phase measurements, which is essential for reliable cellular RBC parameter measurement such as e.g. mean corpuscula volume (MCV) and mean corpuscula hemoglobin concentration (MCHC). This relates to the so-called refractive index - thickness-coupling problem, see e.g. Gili Dardikman, Natan T. Shaked: Review on methods of solving the refractive index-thickness coupling problem in digital holographic microscopy of biological cells, Optics Communications, Volume 422, 2018, Pages 8-16.

Further, to reach consistent results also for cell count and white blood cell (WBC) analysis, adequate numbers of all relevant cell types need to be present in the imaging area of an analysis chamber.

It would be advantageous to connect a measurement chamber to a fluidic system comprising e.g. a pump while allowing a parallelization of the analysis workflow. A fluidic chamber which fits all these needs could support complete blood count measurements in a simpler set-up and would also be suitable for point of care testing settings.

Cell counting is usually performed with a Hemocytometer comprising e.g. a Neubauer grid chamber and the blood sample is usually manually pipetted into this counting chamber. For point of care settings, there are several other approaches pursued. For example, artificially intelligence-based approaches employing viscoelastic focusing of blood cells and staining of the blood cells. Approaches based on computer-vision algorithms employing fluorescence staining of the blood cells. Or approaches based on contact optical microscopy employing labeling of the blood cells and absorption measurements. However, all those alternative approaches show only a relatively low correlation for MCV and MCHC when compared to standard complete blood count analysis results, obtained e.g. by an ADVIA 2120i Hematology System from Siemens Healthineers.

Further, there are several approaches pursued to solve the refractive index-thickness-coupling problem in context with RBC volume and hemoglobin concentration determination employing quantitative phase measurements. For example, approaches employ prior knowledge of the geometry of the investigated blood cells and include pre-preparation by sphering agents and use of geometric models. However, toxic chemicals are needed, and low performance of the geometrical models occur. Other approaches comprise separate height measurements, e.g. employing atomic force microscopy (AFM) and optical coherence tomography (OCT). Alternatively, at least two different surrounding media with different refraction indices (RI) are employed for measuring the same cell. However, due to prohibitively high efforts such approaches are not practicable in routine diagnostic laboratory settings. Alternatively, a highly dispersive surrounding medium is used employing at least two different measuring wavelengths for which a high RI difference of the surrounding medium exists. Further, phase and amplitude measurements are combined.

For the latter two approaches, it would be advantageous and there is a need to provide a faster, simple, and mass producible solution enabling phase calculations employing a one-shot optical device in a reusable fluidic chamber allowing sufficiently high throughput in diagnostic labs.

Summary of the invention

The inventors found a device and a method for optically analyzing a blood cell from a blood sample employing a fluidic chamber allowing complete blood count measurements in a simple set-up which is also suitable for point of care testing. The mass producible solution enables also the possibility of phase calculations employing a one-shot optical device in the reusable fluidic chamber.

A first aspect of the present invention relates to a device for optically analyzing a blood cell from a blood sample, the device comprising

- a microfluidic chamber with at least one fluidic flow-through channel,
- a first inlet port configured to introduce at least a part of the blood sample into the fluidic channel,
- a first outlet port configured to discharge at least a part of the blood sample from the fluidic channel,
- a flow generating and stopping device configured to generate a flow of the sample through the channel and to stop the flow while a least a part of the sample comprising at least one blood cell is situated within the channel and wherein after stopping the flow the sample is only influenced by gravity and inertial forces such that blood cells within the sample sediment on a first area of a lower surface of the channel,

wherein cells sedimented within the first area of the lower surface can be optically analyzed in the chamber, wherein the channel has a height between 20 micrometers and 100 micrometers, preferably between 40 and 60 micrometers, most preferably 50 micrometers, and wherein the first area of the lower surface has a size of at least 50 square mm, preferably at least 100 square mm.

In a second aspect, the present invention relates to a method of optically analyzing a blood cell from a blood sample with a device according to the first aspect of the present invention, the method comprising

i) providing a blood sample obtained from a patient, wherein preferably the sample has been obtained from the patient prior to performing any step of the method,
ii) introducing at least a part of the blood sample into the channel via the first inlet port,
iii) generating a flow of the sample in the channel and stopping the sample flow with the flow generating and stopping device while at least a part of the sample comprising at least one blood cell is situated within the channel and wherein after stopping the flow the sample is only influenced by gravity and inertial forces such that blood cells within the sample sediment on a first area of a lower surface of the channel,
iv) waiting until at least one cell has been sedimented and is in contact with the lower surface of the cannel within the first area,
v) optically analyzing in the chamber cells sedimented within the first area of the lower surface.

The provided blood sample was obtained from the patient. That means that the blood sample was obtained from the patient prior to performing the method for analyzing the blood sample. Thus, the actual process of obtaining the blood sample from the patient is not part of the present method of optically analyzing a blood cell from the blood sample.
A third aspect of the present invention is directed to hematology analyzer comprising a device according to the first aspect of the present invention and a control device which is configured to execute a method according to the second aspect of the present invention on the analyzer.
Further aspects and embodiments of the invention are disclosed in the dependent claims and can be taken from the following description, figures and examples, without being limited thereto.

Figures

The enclosed drawings should illustrate embodiments of the present invention and convey a further understanding thereof. In connection with the description, they serve as explanation of concepts and principles of the invention. Other embodiments and many of the stated advantages can be derived in relation to the drawings. The elements of the drawings are not necessarily to scale towards each other. Identical, functionally equivalent and acting equal features and components are denoted in the figures of the drawings with the same reference numbers, unless noted otherwise.

Figure 1 shows schematically a device (1) for analyzing a blood sample according to the present invention.

Figure 2 shows schematically a method (100) of optically analyzing a blood cell from a blood sample according to the present invention.

Figure 3 shows schematically a hematology analyzer (200) according to the present invention.

Detailed description of the invention

Definitions

Unless defined otherwise, technical and scientific terms used herein have the same meaning as commonly understood by one of ordinary skill in the art to which this invention belongs.

In the context of the present invention a blood sample is a sample which is provided from a patient and is particularly untreated. It is particularly a whole blood sample.

The patient within the scope of the present invention is not particularly restricted. According to certain embodiments, the patient in the present methods is a vertebrate, more preferably a mammal and most preferred a human patient.

A vertebrate within the present invention refers to animals having a vertebra, which includes mammals - including humans, birds, reptiles, amphibians and fishes. The present invention thus is not only suitable for human medicine, but also for veterinary medicine.

Before the invention is described in exemplary detail, it is to be understood that this invention is not limited to the particular component parts of the process steps of the methods described herein as such methods may vary. It is also to be understood that the terminology used herein is for purposes of describing particular embodiments only and is not intended to be limiting. It must be noted that, as used in the specification and the appended claims, the singular forms "a," "an" and "the" include singular and/or plural referents unless the context clearly dictates otherwise. For example, the term "a" as used herein can be understood as one single entity or in the meaning of "one or more" entities. It is also to be understood that plural forms include singular and/or plural referents unless the context clearly dictates otherwise. It is moreover to be understood that, in case parameter ranges are given which are delimited by numeric values, the ranges are deemed to include these limitation values.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

The use of the term "at least one" or "one or more" will be understood to include one as well as any quantity more than one. In addition, the use of the phrase "at least one of X, Y, and Z" will be understood to include X alone, Y alone, and Z alone, as well as any combination of X, Y, and Z.

The use of ordinal number terminology (i.e., "first", "second", "third", "fourth", etc.) is solely for the purpose of differentiating between two or more items and, unless explicitly stated otherwise, is not meant to imply any sequence or order or importance to one item over another or any order of addition.

A first aspect of the present invention relates to a device for optically analyzing a blood cell from a blood sample, the device comprising

- a microfluidic chamber with at least one fluidic flow-through channel,
- a first inlet port configured to introduce at least a part of the blood sample into the fluidic channel,
- a first outlet port configured to discharge at least a part of the blood sample from the fluidic channel,
- a flow generating and stopping device configured to generate a flow of the sample through the channel and to stop the flow while a least a part of the sample comprising at least one blood cell is situated within the channel and wherein after stopping the flow the sample is only influenced by gravity and inertial forces such that blood cells within the sample sediment on a first area of a lower surface of the channel,

wherein cells sedimented within the first area of the lower surface can be optically analyzed in the chamber, wherein the channel has a height between 20 micrometers and 100 micrometers, preferably between 40 and 60 micrometers, most preferably 50 micrometers, and wherein the first area of the lower surface has a size of at least 50 square mm, preferably at least 100 square mm.

The device with the microfluidic chamber is the basis for a complete blood count with one single optical measuring principle. The device uses less reagents and is designed as a low maintenance set-up. Further, the device covers with its dimensions the needs of time efficiency and precision for a medical device.

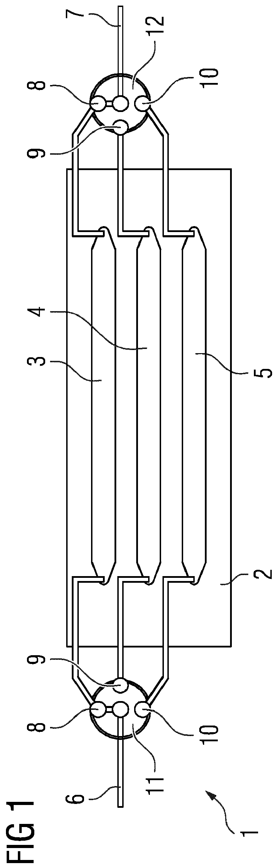

An exemplary device (1) for analyzing a blood sample according to the present invention is shown schematically in Fig. 1. The device (1) comprises a glass chip (2) which comprises a microfluidic chamber with a first, second and third fluidic flow-through channel (3, 4, 5). The first, second and third channels (3, 4, 5) are each connected a first input valve (11) and a second output valve (12) which connect the channels with an inlet (6) and an outlet (7), respectively. The first and second valves are rotary vales which have a first, second and third position (8, 9, 10). Via the first position (8), the first channel (3) is fluidly connected to the inlet (6) and outlet (7), while the second and third position (9, 10) connect the second and third channel (4, 5) with the inlet (6) and outlet (7), respectively.

The height of the chamber is chosen in a way that blood cells from all traveling heights can reach the bottom of the chamber in a sufficiently short time when the fluid flow is stopped. The sedimentation time can be optimized moreover by adjustment of the fluid density and/or viscosity. For example, for Phosphate-buffered saline, the sedimentation velocity ranges for single RBCs between 1-3 $\mu$m/s. Moreover, to keep light loss due to absorption in the fluid column above the object small, the height should advantageously be also as small as possible to enhance signal-to-noise ratios. On the other hand, to prevent the chamber from clogging, a minimal height is necessary, since the largest blood cells have diameters up to approximately 20 $\mu$m, like for example monocytes. Concerning both requirements, a chamber height of about 50 $\mu$m has been found to yield best conditions allowing optimized measurement results.

According to preferred embodiments, the channel has a width between 1 and 3 mm, preferably 2 mm, and/or the channel has a length between 20 mm and 100 mm, preferably between 40 mm and 60 mm, most preferably 50 mm. The dimensions of the chamber in length and/or width are chosen in a way, that a sufficient number of cells can be imaged after sedimentation without overlapping cells, such that the cells form a monolayer of cells. For a complete blood count with a five-part differential about 200-400 white blood cells usually need to be imaged to make sure to find also less present types of cells like e.g. basophiles, which may be present in fewer copy numbers only. Taking into account the chosen chamber height and a certain dilution factor for the blood sample, e.g. a whole blood sample, one yields a necessary area of about 100 mm$^2$. So advantageously, a channel dimension of about 2 mm width and about 50 mm length can be chosen. The dilution rate is advantageously matched to the chamber volume in a way, that the cells form a monolayer on the chamber bottom after all or almost all of them have sedimented. The necessary channel area can be reduced e.g. by imaging the same region for the same patient with a fresh sedimented sample for several times and/or in several parallel chambers.

According to preferred embodiments, the microfluidic chamber comprises more than one fluidic flow-through channel, preferably three or more fluidic flow-through channels, wherein preferably the channels are arranged parallel to each other and are preferably homogeneous. This allows to increase the throughput of the device further for utilizing e.g. the microfluidic chamber for a CBC, since more chambers are present on one chip in parallel. While one sample is imaged, the next sample is already allowed to sediment, allowing significantly increased throughput.

According to preferred embodiments, the inlet and/or outlet ports are connected to a fluidic system via one or more vales, preferably rotary vales. Advantageously, the fluidic system comprises a microfluidic system with pumps and is configured to perform pre-constitution steps of the sample like e.g. mixing.

According to preferred embodiments, an inner surface of the channel is modified such that attachment of cells of certain cell types is decreased or increased, for example by employing chemical and/or mechanical means. Advantageously, the surface is modified by applying a cationic polyethylenimine and/or a steric hindrance polyethyleneglycol (PEG) coating to the surface. E.g., monocytes show a very strong adhesion and spreading to a glass surface, what makes it more difficult to determine the cell condition state, i.e., for example an abnormality. This can be reduced e.g., by a cationic polyethylenimine and/or PEG coating on the glass surface.

According to preferred embodiments, the chamber comprises a bottom part forming a bottom wall of the channel, wherein the bottom wall has a thickness not greater than compensable with a coverglass correction in standard microscope objectives. Advantageously, the bottom of the chamber is sufficiently thin, e.g., about 170 $\mu$m or less, to be compensated with coverglass correction in standard microscope objectives.

According to preferred embodiments, the chamber consists partially or completely of a transparent material, preferable glass. This facilitates taking optical measurements of the sample, including imaging of blood cells.

The fluidic flow-through channel is not particularly restricted, as long as it comprises a structure having inner surfaces through which the blood sample can be flown, wherein the structure is configured to contain the blood sample introduced. According to certain embodiments the fluidic channel is a microchannel, particularly in a suitable sample vessel, made from a suitable material, e.g. glass and/or a suitable polymer resin, for analysis of the blood sample, e.g. with suitable transmissivity for a spectroscopic and/or microscopic analysis for analyzing the blood cell of the blood sample in the fluidic channel, optionally analyzing the settled cells at least for cell types, and/or analyzing at least lysed red blood cells. Alternatively, it can also be a pipe, etc., but preferably comprises at least two parallel inner and outer surfaces for settling cells and/or for ease of analysis. According to preferred embodiments, the fluidic channel is a microchannel in a suitable sample vessel, e.g. inside a chip made e.g. from glass, plastic, etc.

Analyzing the settled cells is not particularly restricted and can be done using usual methods for cell analysis, e.g. microscopy and/or spectroscopy, e.g. for determining cell type, cell volume - particularly for red blood cells (RBC), and/or intracellular hemoglobin. For example, an analyzing unit can comprise a microscope and/or spectroscope, e.g. a UV-Vis spectroscope.

In a second aspect, the present invention relates to a method of optically analyzing a blood cell from a blood sample with a device according to the first aspect of the present invention, the method comprising

i) providing a blood sample obtained from a patient, wherein preferably the sample has been obtained from the patient prior to performing any step of the method,
ii) introducing at least a part of the blood sample into the channel via the first inlet port,
iii) generating a flow of the sample in the channel and stopping the sample flow with the flow generating and stopping device while at least a part of the sample comprising at least one blood cell is situated within the channel and wherein after stopping the flow the sample is only influenced by gravity and inertial forces such that blood cells within the sample sediment on a first area of a lower surface of the channel,

iv) waiting until at least one cell has been sedimented and is in contact with the lower surface of the cannel within the first area,

v) optically analyzing in the chamber cells sedimented within the first area of the lower surface.

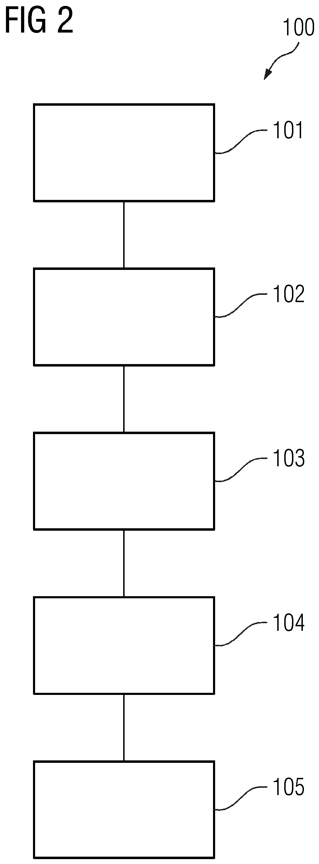

An exemplary method (100) for analyzing a blood sample according to the present invention is shown schematically in Fig. 2. The method (100) employs a device (1) as shown in Fig. 1. A first step comprises providing a blood sample obtained from a patient (101) for analysis. A second step comprises introducing at least a part of the blood sample into the channel via the first inlet port (102). A third step comprises generating a flow of the sample in the channel and stopping the sample flow with the flow generating and stopping device while at least a part of the sample comprising at least one blood cell is situated within the channel and wherein after stopping the flow the sample is only influenced by gravity and inertial forces such that blood cells within the sample sediment on a first area of a lower surface of the channel (103). A fourth step comprises waiting until at least one cell has been sedimented and is in contact with the lower surface of the cannel within the first area (104). A fifth step comprises optically analyzing in the chamber cells sedimented within the first area of the lower surface (105).

According to preferred embodiments, at least one white blood cell (WBC), e.g. a monocyte, has been sedimented and is in contact with the lower surface of the cannel within the first area in step iv).

According to certain embodiments, the blood sample is pumped into the channel, preferably with an optical read-out. The optical read-out allows introducing only a suitable amount of blood sample.

According to preferred embodiments, the blood sample comprises at least one red blood cell in a liquid medium and wherein optically analyzing cells in step v) comprises determining hemoglobin contents and/or volume of the red blood cell in the liquid medium using quantitative phase information and/or quantitative amplitude information obtained from the sample.

According to preferred embodiments, the liquid medium contains or exists of a dilution medium and preferably contains a dye type acid, e.g. Fast Green, preferably in a food-grade quality, e.g. Fast Green FCF. This enables a decrease of the error in phase measurements and possible subsequent hemoglobin concentration and/or volume calculations comprising determination of e.g. mean corpuscula volume (MCV) and/or mean corpuscula hemoglobin concentration (MCHC). In particular in combination with one or more absorption measurements a high-quality correlation to standard test methods can be achieved, i.e. a high correlation can be achieved when comparing analysis results obtained employing the approach of the present invention for MCV and MCHC to standard complete blood count analysis results, obtained e.g. by an ADVIA 2120i Hematology System from Siemens Healthineers.

In general, the so-called refractive index-thickness-coupling problem occurs when using quantitative phase for hemoglobin and volume determination of red blood cells (RBCs) in liquid samples. The phase equation for RBC in a liquid medium can be written as following with equation (i) and (ii):

$$(i) \qquad \Delta\phi(\lambda, x, y) = \frac{2\pi}{\lambda}\left[\beta(\lambda)C(x,y) + \Delta n_{ws}(\lambda, x, y)\right]t(x,y)$$

with

$$(ii) \qquad \Delta n_{ws} = n_{water} - n_{surrounding}$$

and where $\Phi$ denotes the phase, $\lambda$ the wavelength, $\beta$ the refractive increment of hemoglobin, **C** the hemoglobin concentration, $n_{water}$ the refractive index of water, $n_{surrounding}$ the refractive index of the surrounding media, **t** the thickness and **x**, **y** the coordinates in the image, see e.g. also M. Mir, K. Tangella, and G. Popescu: Blood testing at the single cell level using quantitative phase and amplitude microscopy, Biomed. Opt. Express 2, pages 3259-3266 (2011).

Advantageously, a highly dispersive surrounding medium like e.g. Fast green FCF is used which has a high refractive index at or around 680 nm and a lower refractive index at or around e.g. 460 nm. At these wavelengths images are acquired for further post processing for quantitative phase calculation. In principle, even without the use of a surrounding media with a highly different refractive index compared to water the refractive index-thickness-coupling problem can be solved for two wavelengths. However, in this case, due to the nearly vanishing second term in equation (i), i.e.($\Delta n_{ws}$), one gets a rather unfavorable error propagation.

Advantageously, an approach is chosen which combines both phase and amplitude calculations for a higher precision. For amplitude microscopy, Lambert Beer's Law is applicable. Therefore, in general only a bright-field image of the background and the cells is necessary. Advantageously, this can also be achieved in one single image, when e.g. the cell layer is adjusted in a way that sufficient large areas of background between the cells are present. Further, within certain approximations, it can be assumed that the absorption in RBCs is mainly or entirely caused by hemoglobin. Equation (iii) can thus be solved for one wavelength for the thickness of the specimen or hemoglobin concentration and used together with phase calculations at a different wavelength.

$$(\text{iii}) \qquad A'(\lambda, x, y) = -log_{10}\left(\frac{I(\lambda,x,y)}{I_0(\lambda,x,y)}\right) = \frac{\varepsilon(\lambda)t(x,y)C(x,y)}{M}$$

with A denoting absorption, $\lambda$ the wavelength, **I** the intensity after passing the object, $\mathbf{I_0}$ the intensity without the object, E the extinction coefficient of hemoglobin, **t** the thickness of the object, **C** the hemoglobin concentration and **x, y** the coordinates in the image, see e.g. also M. Mir, K. Tangella, and G. Popescu: Blood testing at the single cell level using quantitative phase and amplitude microscopy, Biomed. Opt. Express 2, pages 3259-3266 (2011).

Advantageously, a combination of data from measurements for more wavelengths and absorption and/or phase data is obtained, and the respective equations are numerically solved for least squares error.

With the device for optically analyzing a blood cell from a blood sample of the first aspect particularly the method of optically analyzing a blood cell from a blood sample of the second aspect can be carried out. Thus, embodiments and implementations described with regard to the method of the second aspect above also may be applicable to the device of the first aspect, and vice versa.

In a third aspect, the present invention relates to a hematology analyzer comprising a device according to the first aspect of the present invention and a control device which is configured to execute a method according to the second aspect of the present invention on the analyzer.

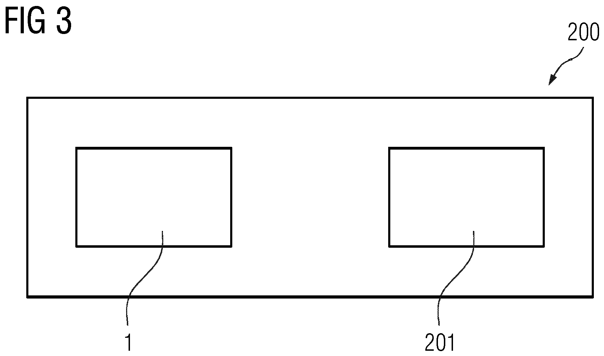

Figure 3 shows schematically a hematology analyzer (200) according to the present invention.

An exemplary hematology analyzer (200) according to the present invention is shown schematically in Fig. 3. The hematology analyzer (200) comprising a device (1) shown in Fig. 1 and a control device (201) which is configured to execute a method (100) as shown in Fig. 2 on the analyzer (200) .

Examples

The present invention will now be described in detail with reference to several examples thereof. However, these examples are illustrative and do not limit the scope of the invention.

A blood sample from a patient was provided. Further, also a fluidic system including a glass chip comprising a microfluidic chamber with three parallel fluidic flow-through channel was provided, to which the sample was provided through an inlet via a first rotary valve in separate parts. The rotary valve has three positions. The first position connecting the inlet with the first channel, the second position connecting the inlet with the second channel, and the third position connecting the inlet with the third channel. Preferably, the sample is provided to the first, second and/or third channel one after the other by switching the position of the first rotary valve accordingly. The first, second and third channel has a height of 50 micrometers and a width of 2 mm and a length of 50 mm such that all three channels are homogeneous in size and design. An inner surface of each of the channels is modified such that attachment of cells of certain cell types is decreased or increased and is modified by applying a cationic PEG coating to the surface. The chamber comprises a bottom part forming a bottom wall of the channels, wherein the bottom wall has a thickness of 170 micrometer and consists partially or completely of a transparent material, preferable glass.

The blood was introduced subsequently into the first, second and third channel via the first inlet port. A Flow was generated of the sample in the three channels, respectively, and the sample flow stopped with the flow generating and stopping device while at least a part of the sample comprising at least one blood cell was situated within the respective channel and wherein after stopping the flow the sample was only influenced by gravity and inertial forces such that blood cells within the sample sedimented on a first area of a lower surface of the respective channel. Subsequently, it was waited until at least one cell had sedimented and was in contact with the lower surface of the cannel within the first area. Further, cells sedimented within the first area of the lower surface were optically analyzed. At least one WBC, e.g. at least one monocyte, had sedimented and was in contact with the lower surface of the channel within the first area and was optically analyzed. Optical analysis included imaging of the cells, in particular the sedimented WBC.

Additionally, or alternatively to other blood cells, the blood sample comprised red blood cells in a liquid medium. The sample was processed in analogy to as described above and the optical analysis included determining hemoglobin contents and/or volume of red blood cells in the liquid medium using quantitative phase information and quantitative amplitude information obtained from the sample.

With the present method and device, performing complete blood count measurements is possible in a simple set-up which is also suitable for point of care testing. Importantly, the microfluidic chamber is reusable. The mass producible solution enables also the possibility of phase calculations employing a one-shot optical device in the fluidic chamber.

List of reference signs

| 1 | device |
|---|---|
| 2 | glass chip |
| 3 | first channel |
| 4 | second channel |
| 5 | third channel |
| 6 | inlet |
| 7 | outlet |
| 8 | first position |
| 9 | second position |
| 10 | third position |
| 11 | first valve |
| 12 | second valve |
| 100 | method |
| 101 | providing a blood sample obtained from a patient |
| 102 | introducing at least a part of the blood sample into the channel via the first inlet port |
| 103 | generating a flow of the sample in the channel and stopping the sample flow with the flow generating and stopping device while at least a part of the sample comprising at least one blood cell is situated within the channel and wherein after stopping the flow the sample is only influenced by gravity and inertial forces such that blood cells within the sample sediment on a first area of a lower surface of the channel |
| 104 | waiting until at least one cell has been sedimented and is in contact with the lower surface of the cannel within the first area |
| 105 | optically analyzing in the chamber cells sedimented within the first area of the lower surface |
| 200 | hematology analyzer |
| 201 | control device |

**Claims**

1. A device (1) for optically analyzing a blood cell from a blood sample, the device comprising

   - a microfluidic chamber with at least one fluidic flow-through channel,
   - a first inlet (6) port configured to introduce at least a part of the blood sample into the fluidic channel,
   - a first outlet (7) port configured to discharge at least a part of the blood sample from the fluidic channel,
   - a flow generating and stopping device configured to generate a flow of the sample through the channel and to stop the flow while a least a part of the sample comprising at least one blood cell is situated within the channel and wherein after stopping the flow the sample is only influenced by gravity and inertial forces such that blood cells within the sample sediment on a first area of a lower surface of the channel,
   wherein cells sedimented within the first area of the lower surface can be optically analyzed in the chamber, wherein the channel has a height between 20 micrometers and 100 micrometers, preferably between 40 and 60 micrometers, most preferably 50 micrometers, and wherein the first area of the lower surface has a size of at least 50 square mm, preferably at least 100 square mm.

2. The device (1) according to claim 1, wherein the channel has a width between 1 and 3 mm, preferably 2 mm.

3. The device (1) according to any one of claims 1 or 2, wherein the channel has length between 20 mm and 100 mm, preferably between 40 mm and 60 mm, most preferably 50 mm.

4. The device (1) according to any one of claims 1 to 3, wherein the microfluidic chamber comprises more than one fluidic flow-through channel, preferably three or more fluidic flow-through channels, wherein preferably the channels are arranged parallel to each other and are preferably homogeneous.

5. The device (1) according to any one of claims 1 to 4, wherein the inlet (6) and/or outlet (7) ports are connected to a fluidic system via one or more vales (11, 12), preferably rotary vales.

6. The device (1) according to any one of claims 1 to 5, wherein an inner surface of the channel is modified such that attachment of cells of certain cell types is decreased or increased.

7. The device (1) according to claim 6, wherein the surface is modified by chemical and/or mechanical means.

8. The device (1) according to claim 7, wherein the surface is modified by applying a cationic polyethylenimine and/or polyethyleneglycol (PEG) coating to the surface.

9. The device (1) according to any one of claims 1 to 8, wherein the chamber comprises a bottom part forming a bottom wall of the channel, wherein the bottom wall has a thickness not greater than compensable with a coverglass correction in standard microscope objectives.

10. The device (1) according to any one of claims 1 to 9, wherein the chamber consists partially or completely of a transparent material, preferable glass.

11. A method (100) of optically analyzing a blood cell from a blood sample with a device according to any of claims 1 to 10, the method comprising

   i) providing a blood sample obtained from a patient (101), wherein preferably the sample has been obtained from the patient prior to performing any step of the method,
   ii) introducing at least a part of the blood sample into the channel via the first inlet port (102),
   iii) generating a flow of the sample in the channel and stopping the sample flow with the flow generating and stopping device while at least a part of the sample comprising at least one blood cell is situated within the channel and wherein after stopping the flow the sample is only influenced by gravity and inertial forces such that blood cells within the sample sediment on a first area of a lower surface of the channel (103),
   iv) waiting until at least one cell has been sedimented and is in contact with the lower surface of the cannel within the first area (104),
   v) optically analyzing in the chamber cells sedimented within the first area of the lower surface (105).

12. Method (100) according to claim 11, wherein at least one white blood cell, e.g. at least one monocyte, has been sedimented and is in contact with the lower surface of the cannel within the first area in step iv).

13. Method (100) according to any one of claims 11 or 12, wherein optically analyzing the cells in step v) comprises imaging the cells.

14. Method (100) according to any one of claims 11 to 13, wherein the blood sample comprises at least one red blood cell in a liquid medium and wherein optically analyzing cells in step v) comprises determining hemoglobin contents and/or volume of the red blood cell in the liquid medium using quantitative phase information and quantitative amplitude information obtained from the sample.

15. Hematology (200) analyzer comprising a device according to any one of claims 1 to 10 and a control device (201) which is configured to execute a method according to any one of claims 11 to 14 on the analyzer.

FIG 1

FIG 2

FIG 3

Europäisches
Patentamt

European
Patent Office

Office européen
des brevets

# EUROPEAN SEARCH REPORT

**Application Number**

EP 21 19 9381

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/009920 A1 (MEDICA CORP [US]) 11 January 2018 (2018-01-11) * page 1, section "Field of the Invention"; page 3, first complete paragraph; paragraph bridging pages 6 and 7; page 8, last paragraph; page 12, first complete paragraph; paragraph bridging pages 12 and 13; paragraph bridging pages 23 and 24; page 25, first complete paragraph; page 26, first complete paragraph; page 31, first complete paragraph; paragraph bridging pages 32 and 33; figures 1,3,4 * | 1-15 | INV. G01N15/14 G01N15/00 |
| X | US 6 251 615 B1 (OBERHARDT BRUCE J [US]) 26 June 2001 (2001-06-26) * column 3, line 21 – line 25 * * column 6, line 6 – line 22 * * column 8, line 54 – column 9, line 19 * * column 12, line 10 – column 14, line 47; figures 1-3 * * column 15, line 3 – line 53 * * column 16, line 59 – column 17, line 4 * * column 19, line 38 – column 21, line 27 * * column 23, line 64 – column 24, line 2 * * column 25, line 16 – line 39; figure 12 * * column 30, line 43 – line 60 * | 1-15 | |
| X | US 2015/337355 A1 (ARAKI JUNGO [JP] ET AL) 26 November 2015 (2015-11-26) * paragraphs [0017], [0021], [0026], [0037], [0039], [0041], [0054], [0055], [0061]; figures 1(A),5(A)-5(D) * | 1-15 | TECHNICAL FIELDS SEARCHED (IPC) G01N B01L |

-/--

The present search report has been drawn up for all claims

| Place of search | Date of completion of the search | Examiner |
|---|---|---|
| The Hague | 11 March 2022 | Eidmann, Gunnar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EUROPEAN SEARCH REPORT

Europäisches
Patentamt
European
Patent Office
Office européen
des brevets

Application Number

EP 21 19 9381

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 10 324 011 B2 (UNIV PRINCETON [US]; UNIV MARYLAND [US]) 18 June 2019 (2019-06-18) * column 59, line 62 – column 60, line 13 * ----- | 8 | |
| A | US 2002/037542 A1 (ALLBRITTON NANCY [US] ET AL) 28 March 2002 (2002-03-28) * paragraph [0153] * ----- | 8 | |
| A | US 2020/122135 A1 (ABATE ADAM R [US] ET AL) 23 April 2020 (2020-04-23) * paragraph [0225] * ----- | 8 | |
| A,D | MUSTAFA MIR ET AL: "Blood testing at the single cell level using quantitative phase and amplitude microscopy", BIOMEDICAL OPTICS EXPRESS, vol. 2, no. 12, 1 December 2011 (2011-12-01), page 3259, XP055209715, ISSN: 2156-7085, DOI: 10.1364/BOE.2.003259 * Abstract, section 1. Introduction, section 3. Materials and methods; figure 1 * ----- | 14 | |

**TECHNICAL FIELDS
SEARCHED (IPC)**

The present search report has been drawn up for all claims

| Place of search | Date of completion of the search | Examiner |
|---|---|---|
| The Hague | 11 March 2022 | Eidmann, Gunnar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 19 9381

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2022

| Patent document cited in search report | | Publication date | Patent family member(s) | | Publication date |
|---|---|---|---|---|---|
| WO 2018009920 | A1 | 11-01-2018 | EP | 3482189 A1 | 15-05-2019 |
| | | | JP | 2019528459 A | 10-10-2019 |
| | | | WO | 2018009920 A1 | 11-01-2018 |
| US 6251615 | B1 | 26-06-2001 | NONE | | |
| US 2015337355 | A1 | 26-11-2015 | EP | 2871232 A1 | 13-05-2015 |
| | | | JP | 6218185 B2 | 25-10-2017 |
| | | | JP | WO2014007190 A1 | 02-06-2016 |
| | | | US | 2015337355 A1 | 26-11-2015 |
| | | | WO | 2014007190 A1 | 09-01-2014 |
| US 10324011 | B2 | 18-06-2019 | CA | 2942831 A1 | 18-09-2014 |
| | | | CN | 105247042 A | 13-01-2016 |
| | | | CN | 113512522 A | 19-10-2021 |
| | | | EP | 2971279 A2 | 20-01-2016 |
| | | | EP | 3608022 A1 | 12-02-2020 |
| | | | US | 2016139012 A1 | 19-05-2016 |
| | | | US | 2019137369 A1 | 09-05-2019 |
| | | | US | 2020025656 A1 | 23-01-2020 |
| | | | US | 2020025657 A1 | 23-01-2020 |
| | | | WO | 2014145075 A2 | 18-09-2014 |
| US 2002037542 | A1 | 28-03-2002 | AU | 2002342599 A1 | 25-11-2002 |
| | | | EP | 1392417 A1 | 03-03-2004 |
| | | | JP | 2004536586 A | 09-12-2004 |
| | | | US | 2002037542 A1 | 28-03-2002 |
| | | | US | 2004161807 A1 | 19-08-2004 |
| | | | WO | 02092199 A1 | 21-11-2002 |
| US 2020122135 | A1 | 23-04-2020 | CA | 3001986 A1 | 28-04-2016 |
| | | | CN | 107107058 A | 29-08-2017 |
| | | | EP | 3209419 A1 | 30-08-2017 |
| | | | US | 2018056288 A1 | 01-03-2018 |
| | | | US | 2020122135 A1 | 23-04-2020 |
| | | | WO | 2016065056 A1 | 28-04-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GILI DARDIKMAN ; NATAN T.** Shaked: Review on methods of solving the refractive index-thickness coupling problem in digital holographic microscopy of biological cells. *Optics Communications,* 2018, vol. 422, 8-16

- **M. MIR ; K. TANGELLA ; G. POPESCU.** Blood testing at the single cell level using quantitative phase and amplitude microscopy. *Biomed. Opt. Express,* 2011, vol. 2, 3259-3266